Europäisches Patentamt

European Patent Office

Office européen des brevets

(11) Publication number: **0 268 403**
A1

# EUROPEAN PATENT APPLICATION

(21) Application number: 87309770.3

(22) Date of filing: 03.11.87

(51) Int. Cl.4: **B21D 39/20** , F01L 1/04 ,
B23P 11/00

(30) Priority: 05.11.86 GB 8626466

(43) Date of publication of application:
25.05.88 Bulletin 88/21

(84) Designated Contracting States:
ES

(71) Applicant: GKN TECHNOLOGY LIMITED
Birmingham New Road
Wolverhampton West Midlands WV4
6BW(GB)

(72) Inventor: Dawson, Ronald John
9 Millfield Road
Bromsgrove Worcestershire B61 7BX(GB)
Inventor: Suter, Geoffrey Michael
47 Victoria Road
Bridgnorth Shropshire, WV16 4LD(GB)

(74) Representative: Dodd, Graham Marshall et al
Guest Keen and Nettlefolds plc Group
Patents and Licensing Department P.O. Box
55 Ipsley House Ipsley Church Lane
Redditch Worcestershire B98 0TL(GB)

(54) Hydraulic radial deformation of a tubular member.

(57) A method and apparatus for hydraulic deformation of a tubular camshaft 13 to lock cam bodies 133, bearing collars 131 and 132, etc. thereon comprises a die cavity receiving the camshaft components and wherein hydraulic fluid is introduced into each end of the die cavity. A pressure transfer block 14 communicates hydraulic fluid from a cylinder 17 to cylinders 16 driving piston nozzles 15 to urge said nozzles into sealing engagement with the ends of the tubular camshaft; each piston nozzle 15 having a through passage therein for transmission of hydraulic fluid therethrough to the interior of the tubular camshaft. Conveniently the pressure transfer block 14 is mounted on a toolset in a press for providing pressure to the hydraulic cylinder 17 although any convenient source of hydraulic fluid under pressure can be utilised.

FIG.1

## HYDRAULIC RADIAL DEFORMATION OF A TUBULAR MEMBER

This invention relates to apparatus and a method for the outward radial deformation of a tubular member, such as a camshaft, by the application of internal fluid pressure within the tubular member.

Tubular camshafts, such as that described in British Patent 1117816, comprise a tubular member of circular cross-section on which metal bodies, such as bearing collar bodies, eccentrics and cam bodies, are secured at axially spaced positions. The various metal bodies have circular bores and are threaded over the tubular member, and then secured thereto by radially outwardly deforming the tube so as to provide a friction grip, this friction grip being enhanced by the provision of teeth. As proposed in our co-pending British Patent Application No. 8605468, cam bodies may be locked against relative angular movement to the tubular member by providing the cam body with a non-circular inner surface, so that the tubular member may be expanded irregularly within the cam body, locking the portion of the tubular member lying within the cam body by being deformed to a non-circular cross-section, thus preventing relative rotation. Such radial deformation is proposed to be carried out by the application of internal fluid pressure. As an alternative, or in addition, it is proposed in our co-pending British Patent Application No. 8617052 to provide a die with cavities appropriately shaped to deform a tubular camshaft and an associated cam body into a non-circular shape in cross-section, using mechanical pressure applied externally to the cam body; it is proposed that internal fluid pressure may be used in conjunction with this mechanical pressure.

In order to put these proposed methods into practice, it is necessary to provide means for applying fluid pressure to the tubular member.

According to a first aspect, the invention provides apparatus for an outward radial deformation of a tubular member by the application of internal fluid pressure within the tubular member, comprising an hydraulic plunger arrangement and means for holding the tubular member against axial movement relative thereto, and means connected to the hydraulic plunger arrangement for supplying hydraulic fluid thereto under pressure, the hydraulic plunger arrangement comprising a piston nozzle slidable in a cylinder between operative and retracted positions, the piston nozzle defining a passage for fluid therethrough and being shaped for sealing engagement with one end of the tubular member to allow the cylinder to communicate with the interior of the tubular member by way of the passage, the arrangement being such that hydraulic fluid supplied to the cylinder from the hydraulic fluid supply means urges the piston nozzle to its operative position at which it is in said sealing engagement with the end of the tubular member, and supplies fluid under pressure through said passage into said tubular member to cause said radial deformation.

The invention provides a simple and rapid means of providing the necessary fluid pressure, since the piston nozzle is capable simultaneously of sealing itself against the end of the tubular member and injecting the fluid under pressure into the tubular member; it may then be withdrawn to allow the tubular member to be removed. The invention is particularly useful in conjunction with a press having a die for holding the tubular member during the said radial deformation process; it is thus a preferred feature of the invention that the holding means comprises a die having a cavity for forming the said tubular member.

The die preferably comprises two cavity-defining die halves which are compressed together by relatively movable elements of the press; the said hydraulic fluid supply means is then conveniently driven by the reaction force of the two die halves acting on the said movable elements of the press.

According to a further aspect, the invention provides a method of outwardly radially deforming a tubular member comprising plunging a piston nozzle into sealing engagement with the tubular member such that the interior of the tubular member communicates with a cylinder which drives the piston, via a passage through the piston nozzle, and applying fluid pressure to the interior of the tubular member from said cylinder to effect said radial deformation.

In order that the invention may be better understood, a preferred embodiment thereof will now be described, by way of example only, with reference to the accompanying diagrammatic drawings, of which:-

Figure 1 is a vertical section taken through the axis of a toolset mounted on a press for tubular camshafts, embodying the invention; and

Figure 2 is an enlargement of part of Figure 1, showing in greater detail a piston nozzle engaging one end of the tubular camshaft.

A press has a top ram 10 vertically reciprocable by the action of a crank (not shown). The top ram 10 has securely attached thereto the upper die half 11 of a die cooperable with the lower die half 12 of the die to define therebetween, when the two die halves are in contact with one another along respective lower and upper planar surfaces, a generally cylindrical die cavity which is closed except at its ends.

The lower die half 12 of the die is mounted upon a pressure transfer block 14 which is itself mounted upon a split adaptor ring 20. The adaptor ring 20 is clamped by a clamping ring 22 to a large diameter annular master piston 24 movable vertically within an hydraulic cylinder 26 on the lower bolster (not shown) of the press.

The annular master piston 24 provides a central cylindrical bore 42 within which there is mounted for reciprocable movement a further, intermediate piston 28 in sealing engagement therewith. The intermediate piston 28 extends outwardly through a smaller diameter portion of the bore and carries on its upper surface an even narrower diameter slave piston 30. The slave piston 30 is mounted for reciprocable movement within a slave cylinder 17 extending axially within the pressure transfer block 14.

It will be appreciated that the arrangement of master, intermediate and slave pistons 24, 28 and 30, constitutes an hydraulic pressure die-intensifier system. Downwards force on the upper die half 11 by the top ram 10 produces a reaction force acting on the lower die half 12 which forces the master piston 24 downwardly relative to the lower bolster. Displacement of the fluid 32 in the cylinder 42 causes the intermediate piston 28 to rise relative to the master piston 24, thus plunging the slave piston 30 upwardly within its cylinder 17.

The hydraulic fluid 32 in the master cylinder 26 fills the space between the lower annular surface of the master piston 24 and below the surface of the intermediate piston 28. A bore 34 extends vertically upwardly through a part of the master piston 24 and is provided with an openable and closeable bleed valve 36 at its upper end. The space 38 above the master piston 24 within the cylinder 26 is filled with air and is vented to the atmosphere through air breather holes 40. Similarly, the space 42 above the intermediate piston 28 is filled with air and may be vented to the atmosphere or pressurized pneumatically through a conduit 44 extending through the master piston 24 for return movement of the intermediate piston 28 as will be further described herein. Adjuster bolts 46 extend through an upper closure 48 of the cylinder 26 for defining the neutral position of the master piston 24.

The neutral position is achieved when the upper and the lower die halves 11, 12 of the die are separated, i.e. before the press stroke commences, by applying pneumatic pressure through conduit 44 above the upper surface of the intermediate piston 28 to force it downwardly and hence to displace hydraulic fluid and force the master piston 24 upwardly until it abuts the adjuster bolts 46. At this stage, the slave piston 30 is thus at its lowermost position within the cylinder 17 of the base 14.

An hydraulic plunger arrangement within the pressure transfer block 14 comprises two identical piston nozzles 15 each mounted for reciprocable movement within a corresponding cylinder 16 extending horizontally through the block 14, at opposite ends of the die. The cylinders 16 communicate with the cylinder 17 of the slave piston 30 through a respective pair of axial 141 and radial 142 bores in the block 14, and the three cylinders 16, 17 and bores 141, 142 are filled with an hydraulic fluid.

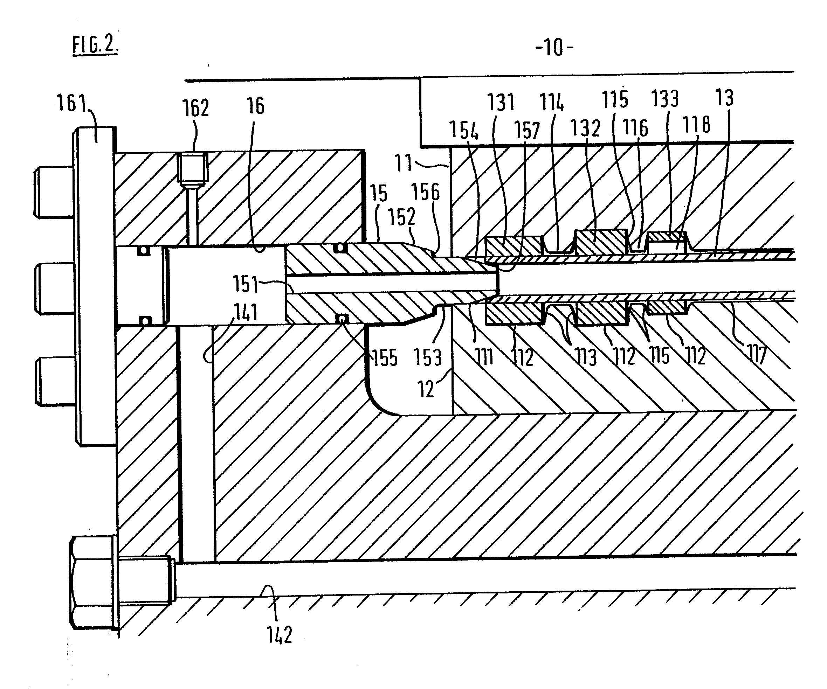

As shown more clearly in Figure 2, each cylinder 16 is closed by means of a cap 161 and a bleed nipple 162. The piston nozzle 15 is sealed within its cylinder 16 by means of a ring seal 155.

Each piston nozzle 15 is movable between a retracted position (not shown) within its cylinder 16, and an operative position (as shown in the drawings). At its operative position, the outer end of each piston nozzle 15 enters the corresponding end opening 111 of the die cavity.

Although not shown in the drawings, means external of the pressure transfer block 14 are associated with each piston nozzle 15 to move each said nozzle between its retracted position and an extended position in which the outer end of each nozzle is entered into the corresponding end opening 111 of the die cavity and in contact with an end of the tubular member 13. In such an extended position, each piston nozzle 15 may be in semi-sealing contact with the end of the tubular member 13 but is not brought into full sealing engagement therewith until so urged under hydraulic pressure as will be further described.

Said external means for effecting movement of the piston nozzles 15 may comprise a mechanical linkage or may comprise hydraulic, pneumatic, electromagnetic or other suitable means.

Each piston nozzle 15 is generally bullet-shaped, with an axial bore 151 for the passage of the hydraulic fluid. An inner half of the piston nozzle 15 is cylindrical, and accommodates the sealing ring 155. An outer half of the piston nozzle is also rotationally symmetric about the axis, but has three sections. A first section 152 is frusto conical, with an axially tapering surface terminating at a radial annular shoulder 156. A second section 153 is cylindrical with a substantially reduced diameter corresponding to the bore of the end opening 111 of the die cavity. The third and outermost section 154 is frusto conical, with an axially-tapering outer surface leading to an end face 157 of a still smaller diameter.

As shown most clearly in Figure 2, the die halves 11, 12 define a cavity for receiving a tubular member such as a tubular camshaft 13. The cavity also accommodates, at each end, first and second bearing collars 131, 132 and, as illustrated diagrammatically, at least one cam body 133. The cam body 133 is pear-shaped in cross section, of which a circular portion has the same curvature as the outer surface of the camshaft 13 for engagement therewith, and of which a further portion is spaced radially from the surface of the camshaft 13, leaving a space 118 therebetween. It will be appreciated that a camshaft typically may comprise five bearing collars, eight cam bodies and one or more gear wheels; the precise number of collars, cam bodies and gear wheels being determined by the particular engine configuration in which the camshaft is mounted.

Thus the die cavity has portions 112 shaped to receive the bearing collars 131, 132 and the cam body 133 at axially spaced positions along the camshaft 13. In between adjacent bearing collars and cam bodies, the cavity is shaped to allow a predetermined degree of radial expansion of the camshaft 13. Thus between the bearing collars 131 and 132 the cavity has a cylindrical portion 114 of a diameter slightly larger than the external diameter of the camshaft 13, opening gradually at 113 to the portions of the cavity which receive the bearing collars. Similarly, between the second bearing collar 132 and the cam body 133, the cavity has a cylindrical portion 116 opening at 115 to the full diameter of the bearing collar 132 or the cam body 133.

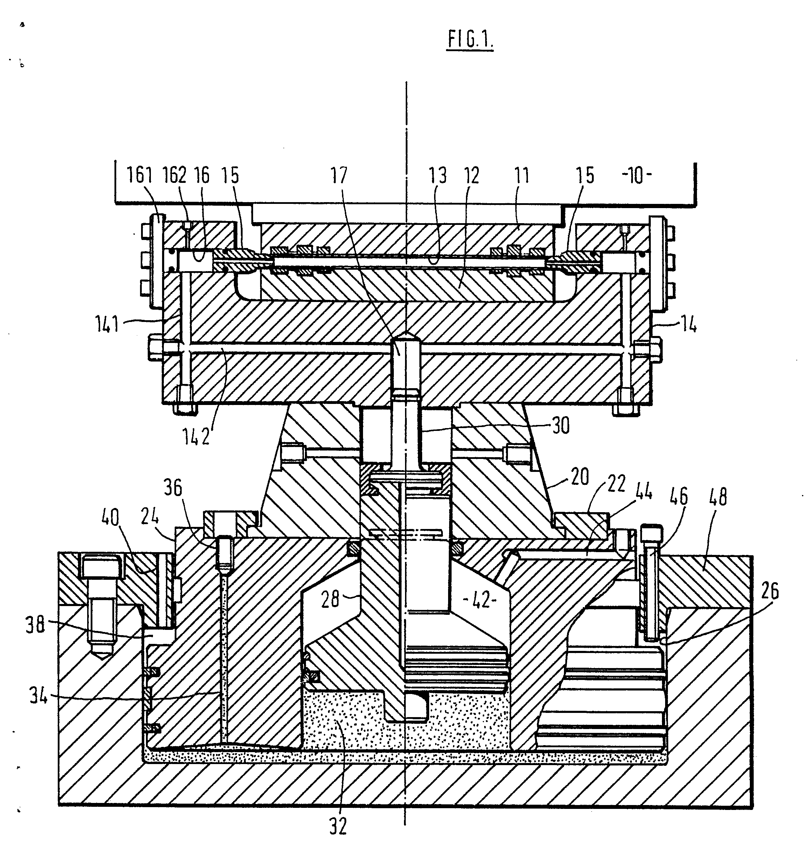

The apparatus of Figures 1 and 2 operates as follows.

Where the camshaft 13 is to be secured to the bearing collars and cam bodies solely by the application of internal fluid pressure, then these components 13, 131, 132 and 133, are simply positioned in the die halves 11, 12 in readiness for the next stage of the process. However, when as is described in our co-pending patent application No. 8617052, the collar bearings 131, 132 and cam bodies 133 and the camshaft 13 are press formed initially, then the formed assembly is positioned in the die halves 11, 12 in readiness for the next stage.

After positioning the components 13, 131, 132 and 133 within the die cavity on the pressure transfer block 14, the piston nozzles 15 are moved by the aforesaid external means into their extended position in semi-sealing engagement with the ends of the tubular member following which downward movement of the top ram 10 of the press may be actuated to initiate hydraulic pressure application to the interior of the tubular member as is further described below.

Downward movement of the top ram 10 presses the lower die half 12 downwardly towards the lower bolster and hence, through the adaptor ring 20 and clamping ring 22, causes the master piston 24 to move inwardly of the master cylinder 26, thereby displacing hydraulic fluid to expel the intermediate piston 28 outwardly and upwardly of the master piston 24. Such movement brings the slave piston 30 upwardly in its cylinder 17, displacing hydraulic fluid into the cylinders 16 of the hydraulic plunger arrangements. The pre-positioned piston nozzles 15 are then impelled, along the same axis and in opposite directions, to seal with the open ends of the camshaft 13 which is held within the die halves 11, 12. The outer tapered surface 154 of each piston nozzle 15 facilitates its entry into sealing engagement with the inner end surfaces of the camshaft 13. The fluid pressure within the cylinders 16 forces the piston nozzles 15 towards their operative sealing positions, as shown in the drawings, at which the ends of the piston nozzles abut against the said inner surfaces of the ends of the camshaft 13, which they may cause slightly to widen. At the operative position of each piston nozzle 15, the hydraulic pressure is balanced by the reaction force from the end of the camshaft 13.

Simultaneously, the hydraulic fluid in the cylinders 16 is forced through the axial bore 151 and into the interior of the camshaft 13, which thus forms a closed hydraulic circuit.

Fluid pressure within the camshaft 13 radially deforms the portions of the camshaft which are allowed by the toolset so to deform. These portions are the spaces 118 within the cam bodies 133, and the waist portions 114, 116 between the collar bearings and cam bodies. This radial deformation locks the collar bearings and cam bodies against both rotational and axial movement relative to the camshaft 13.

The piston nozzles 15 may then be retracted by the aforesaid external means in readiness for the next camshaft when the press has re-cycled.

The hydraulic fluid contained within the pressure transfer block 14 i.e. the fluid within the cylinder 17, the bores 141 and 142 and the cylinders 16 is conveniently water which may include rust inhibitors, disinfectants, lubricants etc. It is preferred that at least that part of the pressure transfer block 14 which mounts the die halves 11 and 12 is submerged in water thereby inhibiting any potential problems associated with seal leakage and air displacement.

Control of the pressure developed in the hydraulic plunger arrangements during the forging stroke is achieved by the provision of a pressure relief system.

Such a pressure relief system may be a blow-off system having a predeterminable pressure setting but is conveniently a variable pressure relief system. Such a variable system may be a pneumatically controlled system comprising a pneumatic piston and cylinder arrangement connected via a small diameter conduit to the rear face of each cylinder 16. Such conduit may communicate with the pneumatic cylinder through a conduit of slightly larger diameter within which is located an elongate flat sided floating member. A stem of the piston of the pneumatic piston and cylinder assembly extends into such larger diameter conduit behind the floating member and a source of compressed air is connected into the cylinder on the other face of the piston; the ratio of the cross-sectional area of the said other face of the piston to the cross-sectional area of the said piston stem being of the order of 1,000:1. With such an arrangement a precise yet variable control may be exercised over the hydraulic pressures used to deform the tubular member 13 by simply varying the air pressure behind the piston; any excess pressure developed within the hydraulic system permitting the hydraulic fluid to bleed off past the flats on the floating member.

The camshaft 13, collar bearings 131, 132 and cam bodies 133 are preferably of a soft steel, but other metals and other materials could be used.

It will be appreciated that although the apparatus has been illustrated in relation to a tubular camshaft, any tubular member, not necessarily of circular cross section, could be produced. The piston nozzle would be shaped appropriately. Further, the means for supplying hydraulic pressure to the hydraulic plunger arrangement need not form part of a press, but could be any source of hydraulic fluid under pressure.

## Claims

1. Apparatus for an outward radial deformation of a tubular member by the application of internal fluid pressure within the tubular member, comprising an hydraulic plunger arrangement and means for holding the tubular member against axial movement relative thereto, and means connected to the hydraulic plunger arrangement for supplying hydraulic fluid thereto under pressure, the hydraulic plunger arrangement comprising a piston nozzle slidable in a cylinder between operative and retracted positions, the piston nozzle defining a passage for fluid therethrough and being shaped for sealing engagement with one end of the tubular member to allow the cylinder to communicate with the interior of the tubular member by way of the passage, the arrangement being such that hydraulic fluid supplied to the cylinder from the hydraulic fluid supply means urges the piston nozzle to its operative position at which it is in said sealing engagement with the end of the tubular member, and supplies fluid under pressure through said passage into said tubular member to cause said radial deformation.

2. Apparatus according to Claim 1, wherein the piston nozzle is slidable in the cylinder in use axially of the tubular member.

3. Apparatus according to Claim 1 or Claim 2, wherein the passage is an axial bore through the piston nozzle.

4. Apparatus according to any preceding claim, wherein the holding means comprises a die having a cavity for forming the said tubular member.

5. Apparatus according to Claim 4, wherein the die comprises cavity-defining members, and wherein the apparatus is part of a press having relatively movable elements for compressing together the said members.

6. Apparatus according to Claim 5, wherein the said hydraulic fluid supply means is driven by the reaction force of the said members acting on the said movable elements of the press.

7. Apparatus according to Claim 6, wherein the hydraulic fluid supply means comprises a piston-and-cylinder arrangement, the cylinder being connected to supply the fluid to the hydraulic plunger arrangement, the piston-and-cylinder arrangement being driven by one or both of said movable elements to effect said fluid supply under pressure, whereby operation of the forging press closes the die and drives the hydraulic plunger arrangement to deform the tubular member.

8. Apparatus according to Claim 6 or 7, wherein, in said hydraulic fluid supply means, the said piston-and-cylinder arrangement is a slave to a master piston-and-cylinder arrangement whose working surface area is substantially greater than that of the slave piston-and-cylinder arrangement.

9. Apparatus according to any preceding claim, wherein the end of the piston nozzle which engages the tubular member has an axially tapering outer surface for entering an open end of the tubular member, the said outer surface abutting against and entering into said sealing engagement with the inner end surface of the said open end when the piston nozzle is forced axially against the tubular member by said hydraulic fluid pressure.

10. Apparatus according to any preceding claim, wherein the hydraulic plunger arrangement comprises a further, similar, piston nozzle slidable in a corresponding cylinder connected to receive said hydraulic fluid under pressure and disposed for engagement of the piston nozzle with the opposite end of the tubular member, so that, in use, the tubular member forms a closed hydraulic circuit with said hydraulic fluid supply means when both piston nozzles are at their operative positions.

11. Apparatus according to any of Claims 4 to 10, wherein the said die defines an opening for access by the or each piston nozzle to the, or to each corresponding, open end of the tubular member.

12. Apparatus according to any of Claims 4 to 11, wherein the said die further comprises at least one cavity into which a portion of the wall of said tubular member is forced to deform by said fluid pressure.

13. A method of outwardly radially deforming a tubular member comprising plunging a piston nozzle into sealing engagement with the tubular member such that the interior of the tubular member communicates with a cylinder which drives the piston, via a passage through the piston nozzle, and applying fluid pressure to the interior of the tubular member from said cylinder to effect said radial deformation.

14. A method according to Claim 13, wherein said tubular member is held in a die associated with said piston nozzle and cylinder.

15. Apparatus according to any of Claims 1 to 12, wherein said tubular member is a camshaft.

16. A method according to either one of Claims 13 or 14, wherein said tubular member is a camshaft, the method including locating at least one additional body at a predetermined axial position over said camshaft, the additional body being such as to resist said radial deformation of the portion of the camshaft which it overlies, such that said radial deformation secures said additional body to said camshaft against relative movement.

17. A method according to Claim 16, wherein the additional body has an inner surface a first portion of which engages the camshaft to resist said radial deformation and a second portion of which is spaced radially from the camshaft, such that the radial deformation of the camshaft into the said second portion locks the additional body to the camshaft against relative movement.

18. Apparatus for the outward radial deformation of a tubular member, substantially as described herein with reference to the accompanying drawings.

19. A method of outwardly radially deforming a tubular member, substantially as described herein with reference to the accompanying drawings.

20. A tubular camshaft with at least one body depending radially therefrom, when produced using apparatus according to any of Claims 1 to 12, 15 or 18.

21. A tubular camshaft with at least one body depending radially therefrom, when produced in accordance with the method of any of Claims 13, 14, 16, 17 or 19.

FIG.1.

FIG.2.
-10-

0 268 403

BAD ORIGINAL

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 777 176 (VITKOVICKE ZELEZARNY KLEMENTA GOTTWALDA) <br> * Page 4, lines 18-25; figure * <br> --- | 1-5,10, 11,13, 14 | B 21 D  39/20 <br> F 01 L   1/04 <br> B 23 P  11/00 |
| X | EP-A-0 078 551 (BRIDGESTONE CYCLE CO., LTD) <br> * Page 6, line 19 - page 7, line 14; figure 4 * <br> --- | 1-5,10, 11,12, 13,14 | |
| X | PATENT ABSTRACTS OF JAPAN, vol. 7, no. 246 (M-253)[1391], 2nd November 1983; & JP-A-58 132 325 (TOYO KOGYO K.K.) 06-08-1983 <br> * Whole abstract; figures * <br> --- | 1-5,9, 13,15, 16 | |
| A | GB-A-2 085 784 (EMHART INDUSTRIES) <br> * Abstract; figure 5 * <br> --- | 6,7 | |
| P,A | EP-A-0 230 731 (R. HUGHES)(05-08-1987) <br> * Page 4, column 5, paragraph 1 * <br> ----- | 1-5,9, 13,15, 16 | TECHNICAL FIELDS SEARCHED (Int. Cl.4) <br><br> B 21 D <br> F 01 L    1 <br> F 16 H <br> B 23 P |

The present search report has been drawn up for all claims

| Place of search | Date of completion of the search | Examiner |
|---|---|---|
| THE HAGUE | 03-02-1988 | MENDE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)